# EUROPEAN PATENT APPLICATION

(11) **EP 1 571 662 A1**
(43) Date of publication of application: **07.09.2005**
(21) Application number: 04300120.5
(22) Date of filing: 05.03.2004
(51) Int. Cl.: G11B 17/04, G11B 33/02

(54) **Door assembly for an electronic device**

(71) Applicant: Thomson Licensing S.A., 92100 Boulogne-Billancourt (FR)
(72) Inventor: Zhu, Hui 3/F, B Bldg. No.1, Chuang Yie Rd. North 510730 Guangzhou (CN); Huang, Jian Hui 3/F, B Bldg. No.1, Chuang Yie Rd. North 510730 Guangzhou (CN)
(74) Representative: Rossmanith, Manfred

(57) **Abstract**

A door assembly for an electronic device cabinet comprises a door member (6, 7) and a web (2) to which the door member (6, 7) is pivotably connected by a hinge. A spring (15) extends along the axis (A) of said hinge so as to engage axially distant locations of said web (2) and of said door member (1).

## Description

The present invention relates to a door assembly, in particular but not necessarily for a cabinet of an electronic device, e.g. for a tape or disc recorder.

In most devices of this type, a spring is associated to a cabinet door member such that either when the door member is opened the spring will be resiliently deformed and will tend to close the door as soon as it is released, or it is resiliently deformed while the door member is in a closed state and will open the door member as soon as some kind of lock is opened.

Often, the spring used in such a door assembly has a coiled portion, the axis of which is more or less aligned with the axis of a hinge that connects the door member to its frame, and which has two branches extending tangentially from the coiled portion, one of which urges against the frame, and the other of which urges against the door member. In order to accommodate such a spring, the door member must be somewhat broader, in the direction parallel to the axis of the hinge, than the door bay, so that there are facing surfaces against which the branches of the spring may urge in order to open the door. If a spring of this type is to be used for resiliently closing a door, its installation is somewhat more tedious than that of a door opening spring, because the branches must be brought into engagement with some holes or projections of the door member and the frame in order to be able to exercise a pulling force between the two.

The object of the present invention is to provide a door assembly comprising a door member and a web to which the door is pivotably connected by a hinge, wherein a spring for opening or closing the door is easy to install and does not increase the dimension of the door member along the axis of the hinge.

This object is achieved by a spring that extends along the axis of said hinge so as to engage axially distant locations of said web, on the one hand, and of said door member, on the other.

Usually, said web is part of a door frame extending around a door bay, and the door member is said to be in a closed position if it is held against the door frame. In the door assembly of the present invention, the spring is preferably used for urging the door member against said frame and into the closed position.

It is further preferred, if the door frame has an inner side and an outer side, that the door member has a door leaf, which, in the closed position, rests on the outer side of said frame and at least one arm extending through the door frame to the hinge located at the inner side of the door frame.

In that case, it is particularly convenient to install the spring at the inner side of the door frame and to have it engage the arm of the door member, which extends through the door frame. In this case, the spring may be placed completely at the inner side of the frame, which makes it particularly easy to install, and which allows to place it so that it is practically not visible for a user looking through the door bay from outside.

Preferably, the door member has at least two arms connecting said hinge to said door leaf, and the spring engages both arms and engages the web at a location between the two arms. In this way, the torques exercised by the two arms onto the spring compensate each other, and the spring cannot avoid being flexed by rotating.

In the simplest of cases, the spring might be a straight wire extending parallel to the axis of the hinge. However, a spring having a central coil and two branches extending from the coil is easier to handle and to fix when assembling the door assembly.

Unlike the conventional springs mentioned above, the axis of such a coil is not parallel to the axis of the hinge but perpendicular to it.

Further features and advantages of the invention will become apparent from the subsequent description of a preferred embodiment referring to the appended drawings.
Fig. 1 is a perspective view of a door assembly according to the invention from its inner side, with the door in its closed position;
Fig. 2 is a partial cross section of the door assembly; and
Fig. 3 is a perspective view of the door assembly with the door member in an open position.

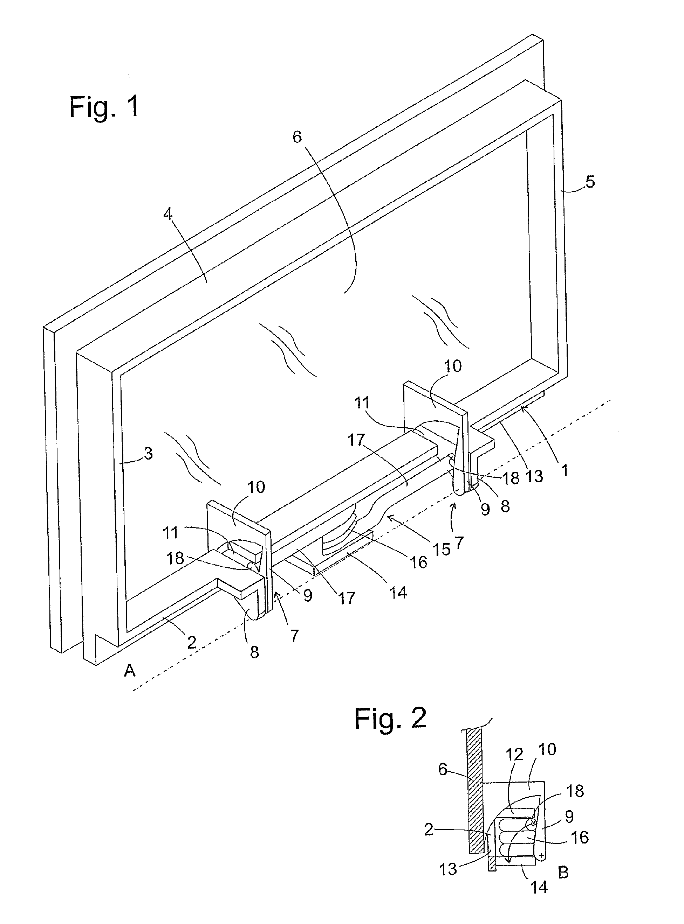

For the sake of simplicity, the frame 1 of the door assembly of Fig. 1 is represented as a simple rectangular shape integrally formed of four webs 2 to 5. It will be readily apparent to a skilled person that the frame 1 might perfectly well have another shape, that it might be assembled from a plurality of individual webs and that the webs might be integrally or ot herwise connected to walls of a device cabinet in which the door assembly is used.

A door leaf 6 is held against the outer side of frame 1. At the inner side of door leaf 6, two arms 7 are integrally formed. The arms 7 extend through slots 11 formed in the bottom web 2 and are pivotably connected to flanges 8 of the web 2 formed adjacent to said slots 11. The pivoting axis is indicated by a dash-dot line A. The arms 7 have a portion 9, which extends radially from axis A and a circumferential portion 10 between one end of radial portion 9 and the door leaf 7.

Fig. 2 is cross section through the bottom web 2 and the lower part of door leaf 6 in a plane extending through one of the slots 11. As can be seen from this cross section and from Fig. 1, the bottom web 2 is formed of an L-shaped profile having, in the perspective of Figs. 1 and 2, a horizontal branch 12 and a vertical branch 13. The slots 11 intersect the horizontal branch 12 completely and the vertical branch 13 in an upper portion thereof. In a central region of web 2, between the two slots 11, a flange 14 extends horizontally from vertical branch 13. A spring 15 has a coiled central position 16, which is stuck between branch 12 and flange 14, and two wings 17, which extend from coiled portion 16 into opposite directions essentially parallel to pivoting axis A. The tips 18 of wings 17 almost abut against the flanges 14, so that the spring 15 cannot move in the axial direction.

The door leaf 6 is free to rotate around axis A over an angle of approximately 90°, until the radial portions 9 of arms 7 abut against the vertical branches 13 of web 2 within the slots 11.

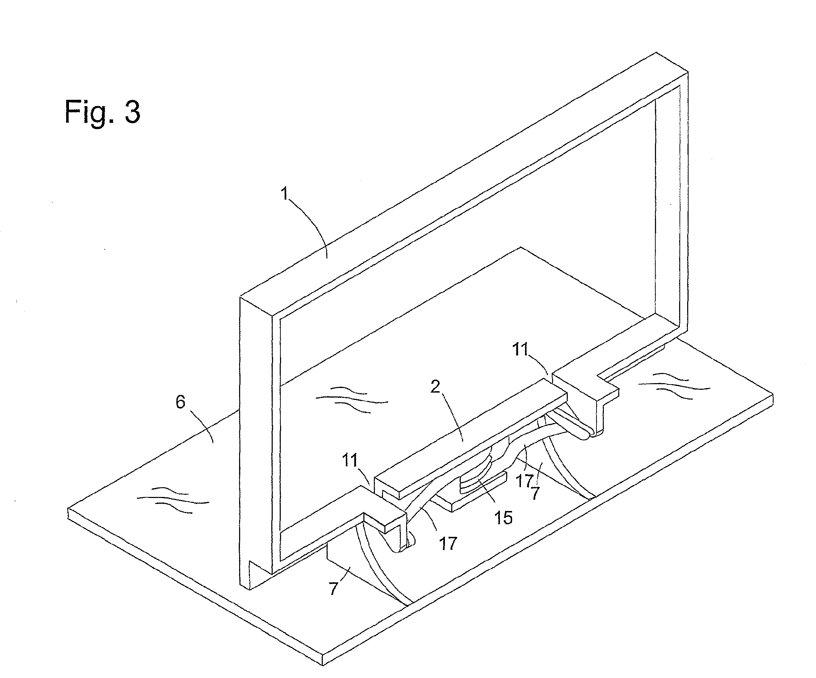

Fig. 3 is a perspective view of the door assembly in an open configuration. The wings 17 of spring 15 are displaced as indicated by arrow B in Fig. 2, whereby they are resiliently bent and exert a force upon the arms 7, which tends to turn the door leaf 6 back into the closed configuration of Fig. 1.

As can readily be recognized, the closing mechanism of this door assembly consumes very little space, since the spring 15 can conveniently be accommodated between the horizontal branch 12 of web 2 and the axis A. There are no members that extend beyond axis A.

Assembly of the door assembly is quite simple. In a first step, coiled portion 16 of spring 15 is simply pressed into the space between horizontal branch 12 and flange 14 of web 2. Secondly, the door leaf 6 is held against the outer side of frame 1, with its arms 7 engaging the central aperture of the frame, and then, it is pushed downwards so that the arms 7 come to engage the slots 11. Preferably, the axis A is simply defined by a small hole formed in one of radial portions 9 or in flange 8, and a corresponding knob formed in the other, so that when the arms 7 are introduced into the slots 11, they will be slightly pushed towards each other until the holes and knobs of arms 7 and flanges 8 come to engage each other.

## Claims

1. Door assembly comprising a door member (6, 7) and a web (2) to which the door member (6, 7) is pivotably connected by a hinge, wherein a spring (15) extends along the axis (A) of said hinge so as to engage axially distant locations of said web (2) and of said door member (1).

2. The door assembly of claim 1, wherein the web (2) is part of a door frame (1) and the spring (15) urges the door member (6, 7) against said frame (1) into a closed position.

3. The door assembly of claim 1 or 2, wherein the door frame (1) has an inner side and an outer side, and the door member (6, 7) has a door leaf (6) which, in a closed position, rests on the outer side of said frame (1) and at least one arm (7) extending through the door frame (1) to the hinge located at the inner side of the door frame (1).

4. The door assembly of claim 3, wherein said spring (15) is fixed to the inner side of said frame (1) and engages said arm (7) extending through the door frame (1).

5. The door assembly of claim 3 or 4, wherein said door member (6, 7) has at least two arms (7) connecting said hinge to said door leaf (6), and that the spring (15) engages both arms (7) and engages the web (2) at a location between the two arms (7).

6. The door assembly of claim 5, wherein the spring (15) comprises a central coil (16) fixed to said web (2) and two wings (17) extending from said central coil (16) to the arms (7).

7. The door assembly of claim 6, wherein said central coil (16) has an axis, which is perpendicular to the axis (A) of the hinge.

8. A cabinet for an electronic device having a door assembly according to one of the preceding claims.
